(19) Europäisches Patentamt
European Patent Office
Office européen des brevets

(11) **EP 4 763 878 A1**

(12) **EUROPEAN PATENT APPLICATION**
published in accordance with Art. 153(4) EPC

(43) Date of publication:
**24.06.2026 Bulletin 2026/26**

(21) Application number: **24854456.1**

(22) Date of filing: **13.08.2024**

(51) International Patent Classification (IPC):
**C08F 279/04** (2006.01)    **C08F 2/00** (2006.01)
**C08F 2/24** (2006.01)    **C08J 5/02** (2006.01)

(52) Cooperative Patent Classification (CPC):
**C08F 2/00; C08F 2/24; C08F 279/04; C08J 5/02**

(86) International application number:
**PCT/KR2024/012081**

(87) International publication number:
**WO 2025/037905 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.08.2023 KR 20230107205**

(71) Applicant: **LG CHEM, LTD.**
**Seoul 07336 (KR)**

(72) Inventors:
• **KIM, In Seok**
**Daejeon 34122 (KR)**
• **CHAI, Joo Byung**
**Daejeon 34122 (KR)**
• **JUNG, Yu Sung**
**Daejeon 34122 (KR)**
• **KIM, Jong Beom**
**Daejeon 34122 (KR)**
• **JEON, Tae Young**
**Daejeon 34122 (KR)**
• **KIM, Yeong A**
**Daejeon 34122 (KR)**

(74) Representative: **Vossius & Partner**
**Patentanwälte Rechtsanwälte mbB**
**Siebertstrasse 3**
**81675 München (DE)**

(54) **METHOD FOR PREPARING GRAFT COPOLYMER, AND RESIN COMPOSITION COMPRISING GRAFT COPOLYMER PREPARED THEREBY**

(57)    The present invention relates to a method for preparing a graft copolymer using a single-type of conjugated diene-based polymer latex limited in size and distribution in order to provide a resin composition having improved impact strength, tensile strength, or flame retardancy, and a resin composition including the same.

EP 4 763 878 A1

**Description**

**Cross-reference to Related Applications**

This application claims the benefit of Korean Patent Application No. 10-2023-0107205, filed on August 16, 2023, in the Korean Intellectual Property Office, the disclosure of which is incorporated herein in its entirety by reference.

**Technical Field**

The present invention relates to a method for preparing a graft copolymer and a resin composition including a graft copolymer prepared thereby.

**BACKGROUND ART**

A graft copolymer, such as an acrylonitrile-butadienestyrene (ABS) copolymer, is prepared by graft polymerization of a vinyl cyanide-based monomer and a vinyl aromatic monomer to a diene-based rubber polymer. An ABS copolymer is excellent in impact resistance, chemical resistance, thermal stability, colorability, fatigue resistance, rigidity, and processibility compared to typical high-impact polystyrene (HIPS), and thus, is used in automotive interior and exterior materials, office equipment, components for various electrical and electronic appliances, toys, or the like.

Meanwhile, the graft polymerization may be performed by introducing an aromatic vinyl-based monomer and a vinyl cyan-based monomer into poly-butadiene latex (PBL) to perform emulsion polymerization, and accordingly, a graft copolymer may be obtained in the form of latex.

The preparation of graft copolymer latex used in the preparation of a resin composition may be performed by using two or more different types of PBL, and if graft copolymer latex prepared using two or more different types of PBL is used in the preparation of a resin composition, there has been a problem in that the tensile strength of a prepared resin composition is reduced. Accordingly, recently, a method for preparing graft copolymer latex, which is used in the preparation of a resin composition, by using one type of PBL has been studied in order to improve the tensile strength of a resin composition.

However, if a single PBL is used to obtain graft copolymer latex, it is difficult to obtain excellent impact strength and uniform physical properties compared to a case in which two or more types of PBL are used.

[Prior Art Document]

[Patent Document]

(Patent Document 0001) JP 7005990 B2

**DISCLOSURE OF THE INVENTION**

**TECHNICAL PROBLEM**

An object of the present invention is to provide a method for preparing a graft copolymer for preparing a resin composition having excellent tensile strength, impact strength, or flame retardancy.

Another object of the present invention is to provide a resin composition having excellent tensile strength, impact strength, or flame retardancy.

**TECHNICAL SOLUTION**

(1) The present invention provides a method for preparing a graft copolymer, the method including S1 obtaining conjugated diene-based polymer latex including conjugated diene-based polymer particles having a gel content of 70 wt% to less than 80 wt%, and having a ratio of 10% or less of particles with a particle diameter of 150 nm or less in a particle distribution, and S2 introducing an aromatic vinyl-based monomer and a vinyl cyan-based monomer in the presence of the conjugated diene-based polymer latex, and performing graft polymerization thereon to obtain graft copolymer latex.

(2) In (1) above, the present invention provides a method for preparing a graft copolymer, wherein the average particle diameter of the conjugated diene-based polymer particles is 280 nm to 320 nm.

(3) In (1) or (2) above, the present invention provides a method for preparing a graft copolymer, wherein the step S2 includes a first polymerization step S2-1 in which the conjugated diene-based polymer latex, the aromatic vinyl-based monomer, the vinyl cyan-based monomer, and a polymerization initiator are introduced in batches, and a second polymerization step S2-2 in which the aromatic vinyl-based monomer, the vinyl cyan-based monomer, and an emulsifier are continuously introduced after the first polymerization step S2-1.

(4) In any one of (1) to (3) above, the present invention provides a method for preparing a graft copolymer, wherein in the first polymerization step S2-1, no emulsifier is introduced.

(5) In any one of (1) to (4) above, the present invention provides a method for preparing a graft copolymer, wherein based on 100 parts by weight of the sum of the conjugated diene-based polymer latex, the aromatic vinyl-based monomer, and the vinyl cyan-based monomer introduced in the first polymerization step, and the aromatic vinyl-based monomer and the vinyl cyan-based monomer introduced in the second polymerization step, the emulsifier introduced in the second polymerization step S2-2 is introduced in an amount of 0.4 parts by weight to 0.7 parts by weight.

(6) In any one of (1) to (5) above, the present invention provides a method for preparing a graft copolymer, wherein the average particle diameter of the conjugated diene-based polymer particles is smaller than the average particle diameter of graft copolymer particles, wherein the average particle diameter of the graft copolymer particles is 300 nm or greater, and 350 nm or less.

(7) In any one of (1) to (6) above, the present invention provides a method for preparing a graft copolymer, wherein the average particle diameter of the conjugated diene-based polymer particles is smaller than the average particle diameter of the graft copolymer particles.

(8) In any one of (1) to (7) above, the present invention provides a method for preparing a graft copolymer, wherein the conjugated diene-based polymer particles have a gel content of 70 wt% to less than 80 wt%, and a ratio of 9% or less of particles with a particle diameter of 150 nm or less in the particle distribution.

(9) The present invention provides conjugated diene-based polymer latex including conjugated diene-based polymer particles having a gel content of 70 wt% to less than 80 wt%, and a ratio of 10% or less of particles with a particle diameter of 150 nm or less in a particle distribution.

(10) The present invention provides conjugated diene-based polymer latex including conjugated diene-based polymer particles having a gel content of 70 wt% to less than 80 wt%, and a ratio of 9% or less of particles with a particle diameter of 150 nm or less in a particle distribution.

(11) The present invention provides a graft copolymer prepared by the method for preparing a graft copolymer of any one of (1) to (7) above.

(12) The present invention provides a resin composition including the graft copolymer of (12) above.

## ADVANTAGEOUS EFFECTS

According to the present invention, a graft copolymer for preparing a resin composition having excellent tensile strength, impact strength, or flame retardancy may be prepared.

In addition, a resin composition having excellent tensile strength, impact strength, or flame retardancy may be prepared.

## MDOE FOR CARRYING OUT THE INVENTION

Hereinafter, the present invention will be described in more detail to facilitate understanding of the present invention.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

In the present invention, the term 'monomer unit' may represent a component, structure, or material itself derived from a monomer, and may represent, as a specific example, a repeating unit formed in a polymer as a result of the participation of an introduced monomer in a polymerization reaction when polymerizing the polymer.

In the present invention, the 'weight average molecular weight' is measured by gel permeation chromatography (GPC). For example, the 'weight average molecular weight' may be measured as a relative value with respect to standard polystyrene (PS) through gel permeation chromatography (GPC) after dissolving a sample to be measured in a tetrahydrofuran (THF) solution.

The term 'composition' used in the present invention includes not only a reaction product and a decomposition product formed from a material of the corresponding composition, but also a mixture of materials including the corresponding composition.

In the present invention, the 'average particle diameter' may mean an arithmetic average particle diameter in a particle size distribution measured by dynamic light scattering, specifically, a scattering intensity average particle diameter. The average particle diameter of the conjugated diene-based polymer may be measured by using Nicomp N3000 equipment (product name, manufacturer: PSS Nicomp).

In the present invention, the term 'latex' may mean that a polymer or copolymer polymerized by polymerization is present in the form of being dispersed in water, and as a specific example, may mean that fine particles of a polymer or copolymer in a rubber phase polymerized by emulsion polymerization are present in the form of being dispersed in water in a colloidal state.

**<Method for preparing graft copolymer>**

A method for preparing a graft copolymer according to an embodiment of the present invention includes S1 obtaining conjugated diene-based polymer latex including conjugated diene-based polymer particles having a gel content of 70 wt% to less than 80 wt%, and having a ratio of 10% or less of particles with a particle diameter of 150 nm or less in a particle distribution, and S2 introducing an aromatic vinyl-based monomer and a vinyl cyan-based monomer in the presence of the conjugated diene-based polymer latex, and performing graft polymerization thereon to prepare a graft copolymer.

The present inventors have confirmed that if a conjugated diene-based polymer satisfying a specific gel content, a specific average particle diameter, and a specific particle size distribution is used in preparing a graft copolymer for preparing a resin composition, the impact strength, tensile strength, and flame retardancy of the resin composition are simultaneously improved, and have devoted themselves to further research and completed the present invention.

Hereinafter, the method for preparing a graft copolymer according to the present invention will be described in detail step by step.

**1) Step of obtaining conjugated diene-based polymer latex**

In an embodiment of the present invention, conjugated diene-based polymer latex used in the preparation of a graft copolymer may be obtained by performing polymerization on a conjugated diene-based monomer by including an emulsifier, an electrolyte, and a molecular weight modifier.

According to an embodiment of the present invention, the conjugated diene-based monomer for obtaining the conjugated diene-based polymer latex may be one or more selected from the group consisting of 1,3-butadiene, 2,3-dimethyl-1,3-butadiene, piperylene, 3-butyl-1,3-octadiene, isoprene, and 2-phenyl-1,3-butadiene, and as a more specific example, may be 1,3-butadiene. Conjugated diene-based polymer particles included in the conjugated diene-based polymer may include a conjugated diene-based monomer unit formed by the conjugated diene-based monomer.

According to an embodiment of the present invention, the emulsifier may be one or more selected from the group consisting of oleic acid potassium, docusate sodium, allyl aryl sulfonate, alkali methyl alkyl sulfonate, sulfonated alkyl ester, fatty acid soap, and rosin acid alkali salt, and preferably, fatty acid soap and rosin acid alkali salt may be used in combination.

According to an embodiment of the present invention, the electrolyte may be one or more selected from the group consisting of $K_2CO_3$, $Na_2SO_4$, $Na_3PO_4$, $NaH_2PO_4$, and $Na_2HPO_4$, preferably, $Na_2SO_4$, $Na_3PO_4$, or a mixture thereof, and more preferably $K_2CO_3$.

According to an embodiment of the present invention, the molecular weight modifier may be one or more selected from the group consisting of t-dodecyl mercaptan, n-dodecyl mercaptan, and $\alpha$-methyl styrene dimer, and more preferably, may be t-dodecyl mercaptan and $\alpha$-methylstyrene dimer.

The conjugated diene-based polymer particles included in the prepared conjugated diene-based polymer latex may have a gel content of 70 wt% to less than 80 wt%. Specifically, the gel content of the conjugated diene-based polymer particles may be 71 wt% or greater, 72 wt% or greater, 73 wt% or greater, or 74 wt% or greater, and 79 wt% or less, 78 wt% or less, 77 wt% or less, or 76 wt% or less.

If the gel content of the conjugated diene-based polymer particles satisfies the above-described range, there is an effect in that the tensile strength, impact strength, or flame retardancy of a resin composition prepared using the conjugated diene-based polymer latex may be improved. If the gel content of the conjugated diene-based polymer particles is less than the above-described range, the tensile strength and the impact strength may be degraded. In addition, if the gel content of the conjugated diene-based polymer particles is greater than the above-described range, there is an effect in that the impact strength, or flame retardancy of a resin composition prepared using the conjugated diene-based polymer latex may be degraded.

In the present invention, a method for calculating the gel content of the conjugated diene-based polymer particles included in the conjugated diene-based polymer latex is as follows. First, conjugated diene-based polymer latex is solidified using a diluted acid or metal salt, washed, and dried in a vacuum oven at 60 °C for 24 hours to obtain conjugated diene-based polymer particles. The conjugated diene-based polymer particles were cut into small pieces with scissors to prepare 1 g of a rubber segment, and the rubber segment was placed in 100 g of toluene, stored in a dark room at 23 °C for 48 hours, and then sol and gel were separated therefrom. The sol and the gel were substituted into Equation 1 below to calculate the gel content. Here, the type of the diluted acid is not particularly limited, but is preferably one or more selected from the group consisting of hydrochloric acid, sulfuric acid, formic acid, and the like. In addition, the type of the metal salt is not particularly limited, but is preferably one or more selected from the group consisting of magnesium sulfate, calcium chloride, aluminum sulfate, and the like.

Gel Content (wt%) = Weight of gel / Weight of rubber segment X 100                    [Equation 1]

Meanwhile, if one type of conjugated diene-based polymer latex is used to prepare graft copolymer latex, the content ratio of particles with a particle diameter of 150 nm or less is generally large in a particle diameter distribution of conjugated diene-based polymer particles. However, if the content ratio of the particles with a particle diameter of 150 nm or less is large in the particle size distribution, there is a problem in that the impact efficiency of a prepared resin composition is significantly lowered.

The present invention uses conjugated diene-based polymer latex having a reduced content of particles with a particle diameter of 150 nm or less in a particle size distribution of conjugated diene-based polymer particles, and thus, secures the impact efficiency of a prepared resin composition even when one type of conjugated diene-based polymer latex is used to prepare a graft copolymer used for preparing a resin composition.

Specifically, according to an embodiment of the present invention, the conjugated diene-based polymer particles included in the prepared conjugated diene-based polymer latex may have a content of 10% or less of particles with a particle diameter of 150 nm or less in the particle size distribution. Preferably, the content of particles with a particle diameter of 150 nm or less in the particle diameter distribution of the conjugated diene-based polymer particles may be 9.5% or less, 9% or less, 8.5% or less, or 8% or less.

If the content of particles with a particle diameter of 150 nm or less in the particle diameter distribution of the conjugated diene-based polymer particles satisfies the above-described range, the tensile strength, impact strength, or flame retardancy of a resin composition prepared using the conjugated diene-based polymer latex may be improved. If the content of particles with a particle diameter of 150 nm or less in the particle diameter distribution of the conjugated diene-based polymer particles is greater than the above-described range, the tensile strength, impact strength, or flame retardancy of a resin composition prepared using the conjugated diene-based polymer latex may be degraded.

In the present invention, the content of particles with a particle diameter of 150 nm or less in the particle diameter distribution of the conjugated diene-based polymer particles included in the conjugated diene-based polymer latex may be calculated by measuring the particle distribution using the CHDF 4000 equipment based on a light dispersion principle.

According to an embodiment of the present invention, the average particle diameter of the conjugated diene-based polymer particles included in the prepared conjugated diene-based polymer latex may be 280 nm to 320 nm. Specifically, the average particle diameter of the conjugated diene-based polymer particles may be 285 nm or greater, 290 nm or greater, or 295 nm or greater, and may be 315 nm or less, 310 nm or less, or 305 nm or less. If the average particle diameter of the conjugated diene-based polymer particles satisfies the above-described range, there is an effect in that the tensile strength, impact strength, or flame retardancy of a resin composition prepared using the conjugated diene-based polymer latex may be improved without degradation in other physical properties. if the average particle diameter of the conjugated diene-based polymer particles is greater than the above-described range, the tensile strength or flame retardancy of a resin composition prepared using the conjugated diene-based polymer latex may be degraded.

According to an embodiment of the present invention, the conjugated diene-based polymer latex used in the preparation of the graft copolymer may be one type of conjugated diene-based polymer latex having one gel content and one average particle diameter instead of different types of conjugated diene-based polymer latex having different gel contents and/or average particle diameters from each other. In the preparation of the graft copolymer, if one type of conjugated diene-based polymer latex is used, the tensile strength of a prepared resin composition may be excellent compared to a case in which different types of conjugated diene-based polymer latex are used.

## 2) Step of obtaining graft copolymer latex

The method for preparing a graft copolymer according to an embodiment of the present invention may obtain graft copolymer latex by introducing an aromatic vinyl-based monomer and a vinyl cyan-based monomer in the presence of the conjugated diene-based polymer latex prepared as described above and then performing graft polymerization.

Specifically, the method for preparing a graft copolymer according to an embodiment of the present invention may include a 'first polymerization step' of initiating a reaction by introducing a portion of an aromatic vinyl-based monomer and a portion of a vinyl cyan-based monomer in batches in the presence of the conjugated diene-based polymer latex, and a 'second polymerization step' of continuously introducing a portion the aromatic vinyl-based monomer and a portion of the vinyl cyan-based monomer after the first polymerization step.

Hereinafter, each of the first polymerization step and the second polymerization step will be described in detail.

## 2-1) First polymerization step

According to an embodiment of the present invention, the first polymerization step initiates a reaction by introducing the conjugated diene-based polymer latex prepared above, an aromatic vinyl-based monomer, and a polymerization initiator in batches.

According to an embodiment of the present invention, the first polymerization step may be performed in a range of 45 °C to 55 °C.

According to an embodiment of the present invention, the content (based on solids) of the conjugated diene-based polymer latex introduced in batches in the first polymerization step may be 50 parts by weight to 70 parts by weight, preferably 55 parts by weight to 62 parts by weight, based on 100 parts by weight of the sum of the conjugated diene-based polymer latex (based on solids), the aromatic vinyl-based monomer, and the vinyl cyan-based monomer. If the above-described range is satisfied, the impact resistance of the graft copolymer may be improved.

According to an embodiment of the present invention, the aromatic vinyl-based monomer introduced in batches in the first polymerization step may be one or more selected from the group consisting of styrene, $\alpha$-methylstyrene, 3-methylstyrene, 4-methylstyrene, 4-propylstyrene, 1-vinylnaphthalene, 4-cyclohexylstyrene, 4-(p-methylphenyl)styrene, and 1-vinyl-5-hexylnaphthalene, and as a specific example, may be styrene.

According to an embodiment of the present invention, the content of the aromatic vinyl-based monomer introduced in batches in the first polymerization step may be 5 parts by weight to 15 parts by weight, preferably 7 parts by weight to 12 parts by weight, based on 100 parts by weight of the sum of the conjugated diene-based polymer latex (based on solids), the aromatic vinyl-based monomer, and the vinyl cyan-based monomer. If the above-described range is satisfied the processability of the graft copolymer may be improved.

According to an embodiment of the present invention, the vinyl cyan-based monomer introduced in batches in the first polymerization step may be one or more selected from the group consisting of acrylonitrile, methacrylonitrile, ethacrylonitrile, phenylacrylonitrile, and $\alpha$-chloroacrylonitrile, and as a specific example, may be acrylonitrile.

According to an embodiment of the present invention, the vinyl cyan-based monomer introduced in batches in the first polymerization step may be 1 part by weight to 5 parts by weight, preferably 2 parts by weight to 3 parts by weight, based on 100 parts by weight of the sum of the conjugated diene-based polymer latex (based on solids), the aromatic vinyl-based monomer, and the vinyl cyan-based monomer. If the above-described range is satisfied the chemical resistance of the graft copolymer may be improved.

According to an embodiment of the invention, the first polymerization step is performed in the presence of an initiator.

According to an embodiment of the present invention, the initiator is a radical initiator, and the radical initiator may be one or more selected from the group consisting of sodium persulfate, potassium persulfate, ammonium persulfate, hydroperoxide, t-butyl peroxide, t-butyl hydroperoxide, cumene hydroperoxide, p-menthane hydroperoxide, di-t-butyl peroxide, t-butyl cumyl peroxide, acetyl peroxide, isobutyl peroxide, octanoyl peroxide, dibenzoyl peroxide, 3,5,5-trimethylhexanol peroxide, t-butyl peroxy isobutyrate, azobis isobutyronitrile, azobis-2,4-dimethylvaleronitrile, azobis cyclohexanecarbonitrile, and azobis methyl isobutyrate, and among these, hydroperoxide is preferable.

According to an embodiment of the present invention, the initiator may be present in 0.01 parts by weight to 1.0 parts by weight, preferably 0.02 parts by weight to 0.08 parts by weight, based on 100 parts by weight of the sum of the conjugated diene-based polymer latex (based on solids), the aromatic vinyl-based monomer, and the vinyl cyan-based monomer. If the above-described range is satisfied, the polymerization stability of the graft polymerization may be improved, and the residual amount of the initiator in the graft copolymer may be minimized.

According to an embodiment of the present invention, a reaction catalyst may be further introduced together with the initiator to promote an initiation reaction. The reaction catalyst may be one or more selected from the group consisting of sodium pyrrolic acid, sodium formaldehyde sulfoxylate, sodium ethylenediamine tetraacetate, ferrous sulfate, dextrose, tetrasodium pyrophosphate, and sodium sulfate, and may preferably be one or more selected from the group consisting of dextrose, ferrous sulfate, and sodium pyrrolic acid.

According to an embodiment of the present invention, the reaction catalyst may be introduced in batches in 0.001 parts by weight to 0.5 parts by weight, preferably 0.01 parts by weight to 0.3 parts by weight, based on 100 parts by weight of the sum of the conjugated diene-based polymer latex (based on solids), the aromatic vinyl-based monomer, and the vinyl cyan-based monomer. If the above-described range is satisfied, the polymerization stability of the graft polymerization may be improved, and the residual amount of the reaction catalyst in the graft copolymer may be minimized.

According to an embodiment of the present invention, in the first polymerization step, an emulsifier may or may not be introduced. In other words, the emulsifier may be introduced in both the first polymerization step and the second polymerization step, may be introduced only in the first polymerization step and may not be introduced in the second polymerization step, and may be introduced only in the second polymerization step without being introduced in the first polymerization step.

According to an embodiment of the present invention, when the emulsifier is introduced in the first polymerization step, it includes a case in which the emulsifier is introduced in batches in the first polymerization step, but not introduced in the second polymerization step, or a case in which a portion of the emulsifier is introduced in the first polymerization step, and the remaining emulsifier is introduced in the second polymerization step.

According to an embodiment of the present invention, if the emulsifier is introduced in batches in the first polymerization step, the emulsifier may be one or more selected from the group consisting of sodium dicyclohexyl sulfosuccinate, sodium di-(cyclohexyl)-sulfosuccinate, sodium dodecyl sulfate, sodium dodecyl benzene sulfonate, sodium octadecyl sulfate, sodium oleic sulfate, potassium dodecyl sulfate, potassium octadecyl sulfate, fatty acid potassium salt, and sodium rosinate.

According to an embodiment of the present invention, if the emulsifier is introduced in batches in the first polymerization step, the emulsifier may be introduced in batches in 0.1 parts by weight to 0.6 parts by weight, preferably 0.2 parts by weight to 0.4 parts by weight, based on 100 parts by weight of the sum of the conjugated diene-based polymer latex (based on solids), the aromatic vinyl-based monomer, and the vinyl cyan-based monomer. If the above-described range is satisfied, the polymerization stability of the graft polymerization may be improved.

According to an embodiment of the present invention, if the emulsifier is introduced in the first polymerization step, the flow index of a prepared resin composition may be improved.

Meanwhile, according to an embodiment of the present invention, if the emulsifier is not introduced in the first polymerization step, the emulsifier is introduced in the second polymerization step, and in this case, mechanical stability of prepared graft copolymer latex is secured, and the flame retardancy of a prepared resin composition may be further improved.

### 2-2) Second polymerization step

According to an embodiment of the present invention, after the first polymerization step, the second polymerization step performs a polymerization reaction by continuously introducing an aromatic vinyl-based monomer and a vinyl cyan-based monomer.

According to an embodiment of the present invention, the first polymerization step may be performed in a range of 65 °C to 75 °C.

According to an embodiment of the present invention, the aromatic vinyl-based monomer continuously introduced in the second polymerization step may be one or more selected from the group consisting of styrene, $\alpha$-methylstyrene, 3-methylstyrene, 4-methylstyrene, 4-propylstyrene, 1-vinylnaphthalene, 4-cyclohexylstyrene, 4-(p-methylphenyl) styrene, and 1-vinyl-5-hexylnaphthalene, and as a specific example, may be styrene.

According to an embodiment of the present invention, the content of the aromatic vinyl-based monomer continuously introduced in the second polymerization step may be 20 parts by weight to 25 parts by weight, preferably 21 parts by weight to 23 parts by weight, based on 100 parts by weight of the sum of the conjugated diene-based polymer latex (based on solids), the aromatic vinyl-based monomer, and the vinyl cyan-based monomer. If the above-described range is satisfied the processability of the graft copolymer may be improved.

According to an embodiment of the present invention, the vinyl cyan-based monomer continuously introduced in the second polymerization step may be one or more selected from the group consisting of acrylonitrile, methacrylonitrile, ethacrylonitrile, phenylacrylonitrile, and $\alpha$-chloroacrylonitrile, and as a specific example, may be acrylonitrile.

According to an embodiment of the present invention, the vinyl cyan-based monomer continuously introduced in the second polymerization step may be 5 parts by weight to 10 parts by weight, preferably 6 parts by weight to 8 parts by weight, based on 100 parts by weight of the sum of the conjugated diene-based polymer latex (based on solids), the aromatic vinyl-based monomer, and the vinyl cyan-based monomer. If the above-described range is satisfied the chemical resistance of the graft copolymer may be improved.

According to an embodiment of the present invention, in the second polymerization step, a molecular weight modifier may be further introduced continuously.

According to an embodiment of the present invention, the molecular weight modifier may be one or more selected from the group consisting of t-dodecyl mercaptan, n-dodecyl mercaptan, and $\alpha$-methyl styrene dimer, and among these, t-dodecyl mercaptan is preferable.

According to an embodiment of the present invention, the molecular weight modifier may be introduced in 0.05 parts by weight to 0.5 parts by weight, preferably 0.10 parts by weight to 0.3 parts by weight, based on 100 parts by weight of the sum of the diene-based rubber polymer, the vinyl cyanide-based monomer, and the vinyl aromatic-based monomer. If the above-described range is satisfied, the weight average molecular weight of a shell grafted to a core of the conjugated diene-based polymer may be easily adjusted.

According to an embodiment of the present invention, an initiator may be continuously introduced in the second polymerization step.

According to an embodiment of the present invention, the initiator is a radical initiator, and the radical initiator may be one or more selected from the group consisting of sodium persulfate, potassium persulfate, ammonium persulfate, hydroperoxide, t-butyl peroxide, t-butyl hydroperoxide, cumene hydroperoxide, p-menthane hydroperoxide, di-t-butyl peroxide, t-butyl cumyl peroxide, acetyl peroxide, isobutyl peroxide, octanoyl peroxide, dibenzoyl peroxide, 3,5,5-trimethylhexanol peroxide, t-butyl peroxy isobutyrate, azobis isobutyronitrile, azobis-2,4-dimethylvaleronitrile, azobis cyclohexanecarbonitrile, and azobis methyl isobutyrate, and among these, hydroperoxide is preferable.

According to an embodiment of the present invention, in the second polymerization step, the initiator may be continuously introduced in 0.01 parts by weight to 0.5 parts by weight, preferably 0.05 parts by weight to 0.3 parts by weight, based on 100 parts by weight of the sum of the conjugated diene-based polymer latex (based on solids), the aromatic vinyl-based monomer, and the vinyl cyan-based monomer. If the above-described range is satisfied, the polymerization stability of the graft polymerization may be improved, and the residual amount of the initiator in the graft copolymer may be minimized.

According to an embodiment of the present invention, in the second polymerization step, an emulsifier may or may not be introduced. In other words, the emulsifier may be introduced in both the first polymerization step and the second polymerization step, may be introduced only in the first polymerization step and may not be introduced in the second polymerization step, and may be introduced only in the second polymerization step without being introduced in the first polymerization step.

According to an embodiment of the present invention, when the emulsifier is introduced in the second polymerization step, it includes a case in which a portion of the emulsifier is introduced in the first polymerization step, and the remaining emulsifier is continuously introduced in the second polymerization step, or a case in which the emulsifier is not introduced in the first polymerization step, but the emulsifier is continuously introduced in the second polymerization step.

According to an embodiment of the present invention, if the emulsifier is continuously introduced in the second polymerization step, the emulsifier may be one or more selected from the group consisting of sodium dicyclohexyl sulfosuccinate, sodium di-(cyclohexyl)-sulfosuccinate, sodium dodecyl sulfate, sodium dodecyl benzene sulfonate, sodium octadecyl sulfate, sodium oleic sulfate, potassium dodecyl sulfate, potassium octadecyl sulfate, fatty acid potassium salt, and sodium rosinate.

According to an embodiment of the present invention, if the emulsifier is continuously introduced in the second polymerization step, the emulsifier may be introduced in 0.3 parts by weight to 0.7 parts by weight, preferably 0.4 parts by weight to 0.6 parts by weight, based on 100 parts by weight of the sum of the conjugated diene-based polymer latex (based on solids), the aromatic vinyl-based monomer, and the vinyl cyan-based monomer. If the above-described range is satisfied, the mechanical stability of the prepared graft copolymer latex may be secured, and the flame retardancy of a prepared resin composition may be further improved.

Meanwhile, according to an embodiment of the present invention, if the emulsifier is not introduced in the second polymerization step, the emulsifier is introduced in batches in the first polymerization step, and in this case, the polymerization stability of the graft polymerization may be improved.

According to an embodiment of the present invention, at the end of the second polymerization step, a reaction catalyst may be further introduced. The reaction catalyst may be one or more selected from the group consisting of sodium pyrrolic acid, sodium formaldehyde sulfoxylate, sodium ethylenediamine tetraacetate, ferrous sulfate, dextrose, tetrasodium pyrophosphate, and sodium sulfate, and may preferably be one or more selected from the group consisting of dextrose, ferrous sulfate, and sodium pyrrolic acid.

According to an embodiment of the present invention, in the second polymerization step, the reaction catalyst may be introduced in 0.0001 parts by weight to 0.1 parts by weight, preferably 0.0002 parts by weight to 0.05 parts by weight, based on 100 parts by weight of the sum of the conjugated diene-based polymer latex (based on solids), the aromatic vinyl-based monomer, and the vinyl cyan-based monomer. If the above-described range is satisfied, the polymerization stability of the graft polymerization may be improved, and the residual amount of the reaction catalyst in the graft copolymer may be minimized.

According to an embodiment of the present invention, a coagulant and an antioxidant may be introduced into the graft copolymer latex obtained through the first polymerization step and the second polymerization step to coagulate the graft copolymer, and then dehydration and drying processes may be performed thereon to obtain a graft copolymer in the form of powder.

**<Resin composition>**

According to an embodiment of the present invention, a resin composition includes a graft copolymer obtained according to an embodiment of the present invention.

According to an embodiment of the present invention, the resin composition may include a non-graft copolymer including an aromatic vinyl-based monomer unit and a vinyl cyan-based monomer unit.

According to an embodiment of the present invention, an aromatic vinyl-based monomer for forming the aromatic vinyl-based monomer unit of the non-graft copolymer may be one or more selected from the group consisting of styrene, $\alpha$-methylstyrene, 3-methylstyrene, 4-methylstyrene, 4-propylstyrene, 1-vinylnaphthalene, 4-cyclohexylstyrene, 4-(p-methylphenyl) styrene, and 1-vinyl-5-hexylnaphthalene, and as a specific example, may be styrene.

According to an embodiment of the present invention, a vinyl cyan-based monomer for forming the vinyl cyan-based monomer unit of the non-graft copolymer may be one or more selected from the group consisting of acrylonitrile, methacrylonitrile, ethacrylonitrile, phenylacrylonitrile, and $\alpha$-chloroacrylonitrile, and as a specific example, may be acrylonitrile.

The non-graft copolymer may include the aromatic vinyl-based monomer unit in 60 mass% to 80 mass%, and may include the vinyl cyan-based monomer in 20 mass% to 40 mass%. Specifically, the non-graft copolymer may include the aromatic vinyl-based monomer unit in 62 mass% or greater, 64 mass% or greater, or 65 mass% or greater, and may include the same in 78 mass% or less, 76 mass% or less, or 75 mass% or less. In addition, the non-graft copolymer may include the vinyl cyan-based monomer unit in 22 mass% or greater, 24 mass% or greater, or 25 mass% or greater, and may include the same in 38 mass% or less, 36 mass% or less, or 35 mass% or less. When the above-described conditions are satisfied, a resin composition having excellent processability and chemical resistance may be prepared.

According to an embodiment of the present invention, the resin composition may include the graft copolymer in 20 parts by weight to 40 parts by weight, and may include the non-graft copolymer in 60 parts by weight to 80 parts by weight based on 100 parts by weight of the sum of the graft copolymer and the non-graft copolymer, Specifically, the resin composition may include the graft copolymer in 22 parts by weight or greater, 25 parts by weight or greater, or 27 parts by weight or greater, and may include the same in 38 parts by weight or less, 35 parts by weight or less, or 32 parts by weight or less based on 100 parts by weight of the sum of the graft copolymer and the non-graft copolymer. In addition, the resin composition may include the non-graft copolymer in 62 parts by weight or greater, 65 parts by weight or greater, or 67 parts by weight or greater, and may include the same in 78 parts by weight or less, 75 parts by weight or less, or 72 parts by weight or less based on 100 parts by weight of the sum of the graft copolymer and the non-graft copolymer. When the above-described range is satisfied, a resin composition having excellent processability and impact resistance may be prepared.

According to an embodiment of the present invention, the resin composition may have secured flame retardancy by further including a flame retardant.

According to an embodiment of the present invention, the flame retardant is for imparting flame retardancy to a resin composition, and may be a halogen-based flame retardant, specifically one or more of a chloro-based flame retardant and a bromine-based flame retardant, and more specifically, a bromine-based flame retardant.

According to an embodiment of the present invention, the bromine-based flame retardant may be one or more selected from the group consisting of tetrabromo bisphenol A, decabromo diphenyl oxide, decabromodulatidediphenyl ethane, 1,2-bis(2,4,6-tribromophenyl) ethane, octabromo-1,2,2-trimethyl-1-phenyindane, tetrabromo bisphenol A-bis(2,3-dibromopropyl ether), and 2,4,6-tris(2,4,6-tribromophenoxy)-1,3,5-triazine, and as a more specific example, may be 2,4,6-tris(2,4,6-tribromophenoxy)-1,3,5-triazine.

According to an embodiment of the present invention, the flame retardant may be included in 10 parts by weight to 30 parts by weight or 12 parts by weight to 28 parts by weight based on 100 parts by weight of the content of the graft copolymer and the non-graft copolymer, and as a more specific example, may be included in 15 parts by weight or more and 25 parts by weight or less. If the above-described range is satisfied, excellent flame retardancy and fluidity may be imparted to a composition for a flame retardant resin without degradation in other physical properties.

According to an embodiment of the present invention, the composition for a flame retardant resin may further include a flame retardant aid. The flame retardant aid used in the present invention may be one or more selected from the group consisting of antimony trioxide, polysiloxane compounds, biotite, muscovite, iron oxide, tungsten oxide, and calcium carbonate, and as a more specific example, may be antimony trioxide.

The flame retardant aid may be included in 1 part by weight to 7 parts by weight based on 100 parts by weight of the content of the graft copolymer and the non-graft copolymer. More specifically, the flame retardant aid may be included in 2 parts by weight to 5 parts by weight based on 100 parts by weight of the content of the graft copolymer and the non-graft copolymer. If the above-described range is satisfied, excellent flame retardancy may be imparted to the composition for a flame retardant resin without degradation in other physical properties.

Hereinafter, embodiments of the present invention will be described in detail so that those skilled in the art may easily carry out the present invention. However, the present invention may be embodied in many different forms, and is not limited to the embodiments set forth herein.

**Example 1**

<Preparation of conjugated diene-based polymer latex>

70 parts by weight of ion exchange water, 70 parts by weight of 1,3-butadiene as a monomer, 0.8 parts by weight of fatty acid soap and 1.0 part by weight of potassium rosinate salt as emulsifiers, 1.2 parts by weight of potassium carbonate ($K_2CO_3$) as an electrolyte, 0.3 parts by weight of tert-dodecyl mercaptan (TDDM) as a molecular weight regulator, and 0.3 parts by weight of organic-potassium persulfate as a polymerization initiator were introduced in batches to a nitrogen-substituted reactor, and then a polymerization reaction was performed thereon at a reaction temperature of 74 °C. When a polymerization conversion rate was 30% to 40%, the remaining 30 parts by weight of 1,3-butadiene was introduced for 5 consecutive hours, and when the polymerization conversion rate was 60%, 0.15 parts by weight of potassium persulfate, and 0.1 parts by weight of tert-dodecyl mercaptan were introduced thereto in batches, and then the temperature was raised to 80 °C to perform a polymerization reaction. Thereafter, when the polymerization conversion rate was 75%, 0.03 parts by weight of t-butyl hydroperoxide, 0.054 parts by weight of dextrose, 0.04 parts by weight of sodium pyrrolic acid, and 0.002 parts by weight of ferrous sulfate were introduced thereto, and then when the polymerization conversion rate was 90%, the reaction was terminated to obtain conjugated diene-based polymer latex having a gel content of 76%, an average particle diameter of 300 nm, and a content of 0% of particles with a particle diameter of 150 nm or less in a particle diameter distribution. At this time, the total time consumed for the polymerization reaction was 25 hours.

<Preparation of graft copolymer latex>

A mixed solution of 60 parts by weight (based on solids) of the prepared conjugated diene-based polymer latex, 100 parts by weight of ion exchange water, 7.5 parts by weight of styrene as a monomer, 2.5 parts by weight of acrylonitrile, 0.05 parts by weight of hydroperoxide as an initiator, 0.08 parts by weight of dextrose, 0.05 parts by weight of sodium pyrrolic acid, and 0.001 parts by weight of ferrous sulfate as a reaction catalyst was introduced in batches to a nitrogen-filled polymerization reactor, and a reaction was initiated at 50 °C (first polymerization step).

After the first polymerization step, 22.5 parts by weight of styrene, 7.5 parts by weight of acrylonitrile, 0.6 parts by weight of fatty acid potassium salt as an emulsifier, 0.12 parts by weight of t-dodecylmercaptan as a molecular weight regulator, and 0.1 parts by weight of hydroperoxide as an initiator were continuously introduced in an emulsified state (emulsified monomer) thereto while raising the temperature to 70 °C for about one hour (second polymerization step).

At the end of the second polymerization step, 0.04 parts by weight of dextrose, 0.03 parts by weight of sodium pyrrolic acid, and 0.0005 parts by weight of ferrous sulfate were introduced in bathes thereto, and then the reaction was terminated after raising the temperature to 80 °C over 1 hour to obtain graft copolymer latex in which graft copolymer particles (solids) were dispersed (third polymerization step).

<Preparation of graft copolymer powder>

0.4 parts by weight of an antioxidant (A/O) was introduced to the graft copolymer latex subjected to the reaction, and the graft copolymer latex was coagulated with 1.7 parts by weight of sulfuric acid, dehydrated, and then dried using a hot air fluidized bed dryer to obtain graft copolymer powder having a moisture content of less than 1%.

<Preparation of resin composition>

30 parts by weight of the obtained graft copolymer powder, 70 parts by weight of styrene-acrylonitrile (SAN, 81HF from LG Chemical Co., Ltd.) pellets, 18 parts by weight of a flame retardant (2,4,6-tris(2,4,6-bromophenoxy)-1,3,5-triazine, trade name FR-245), 3 parts by weight of a flame retardant aid (antimony trioxide), 3.0 parts by weight of a lubricant (ethylene bis stearamide), 0.2 parts by weight of a stabilizer (Irganox 1076), and 0.1 parts by weight of an anti-drip agent (polytetrafluoroethylene) were uniformly mixed using a Henschel mixer, extruded, and injected to prepare a resin composition.

**Example 2**

<Preparation of conjugated diene-based polymer latex>

70 parts by weight of ion exchange water, 70 parts by weight of 1,3-butadiene as a monomer, 0.8 parts by weight of fatty acid soap and 1.0 part by weight of potassium rosinate salt as emulsifiers, 1.2 parts by weight of potassium carbonate ($K_2CO_3$) as an electrolyte, 0.3 parts by weight of tert-dodecyl mercaptan (TDDM) as a molecular weight regulator, and 0.3 parts by weight of organic potassium persulfate as a polymerization initiator were introduced in batches to a nitrogen-substituted reactor, and then a polymerization reaction was performed thereon at a reaction temperature of 74 °C. When a polymerization conversion rate was 30% to 40%, 20 parts by weight of 1,3-butadiene was introduced for 5 consecutive hours, and when the polymerization conversion rate was 60%, 0.15 parts by weight of potassium persulfate, and 0.1 parts by weight of tert-dodecyl mercaptan were introduced thereto in batches, and then the temperature was raised to 80 °C to perform a polymerization reaction. Thereafter, when the polymerization conversion rate was 75%, the remaining 10 parts by weight of 1,3-butadiene, 0.03 parts by weight of t-butyl hydroperoxide, 0.054 parts by weight of dextrose, 0.04 parts by weight of sodium pyrrolic acid, and 0.002 parts by weight of ferrous sulfate were introduced thereto, and then when the polymerization conversion rate was 90%, the reaction was terminated to obtain conjugated diene-based polymer latex having a gel content of 73%, an average particle diameter of 300 nm, and a content of 5% of particles with a particle diameter of 150 nm or less in a particle diameter distribution. At this time, the total time consumed for the polymerization reaction was 25 hours.

A resin composition was prepared in the same manner as in Example 1, except that the obtained conjugated diene-based polymer latex was used in the first polymerization step.

## Example 3

<Preparation of conjugated diene-based polymer latex>

70 parts by weight of ion exchange water, 65 parts by weight of 1,3-butadiene as a monomer, 0.8 parts by weight of fatty acid soap and 1.0 part by weight of potassium rosinate salt as emulsifiers, 1.2 parts by weight of potassium carbonate ($K_2CO_3$) as an electrolyte, 0.3 parts by weight of tert-dodecyl mercaptan (TDDM) as a molecular weight regulator, and 0.3 parts by weight of organic potassium persulfate as a polymerization initiator were introduced in batches to a nitrogen-substituted reactor, and then a polymerization reaction was performed thereon at a reaction temperature of 74 °C. When a polymerization conversion rate was 30% to 40%, 20 parts by weight of 1,3-butadiene was introduced for 5 consecutive hours, and when the polymerization conversion rate was 60%, 0.15 parts by weight of potassium persulfate, and 0.1 parts by weight of tert-dodecyl mercaptan were introduced thereto in batches, and then the temperature was raised to 80 °C to perform a polymerization reaction. Thereafter, when the polymerization conversion rate was 75%, the remaining 15 parts by weight of 1,3-butadiene, 0.03 parts by weight of t-butyl hydroperoxide, 0.054 parts by weight of dextrose, 0.04 parts by weight of sodium pyrrolic acid, and 0.002 parts by weight of ferrous sulfate were introduced thereto, and then when the polymerization conversion rate was 90%, the reaction was terminated to obtain conjugated diene-based polymer latex having a gel content of 71%, an average particle diameter of 297 nm, and a content of 12% of particles with a particle diameter of 150 nm or less in a particle diameter distribution. At this time, the total time consumed for the polymerization reaction was 25 hours.

A resin composition was prepared in the same manner as in Example 1, except that the obtained conjugated diene-based polymer latex was used in the first polymerization step.

## Example 4

A resin composition was prepared in the same manner as in Example 1, except that the conjugated diene-based polymer latex obtained in Example 2 was used in the first polymerization step, and 0.6 parts by weight of fatty acid potassium salt was introduced as an emulsifier in the first polymerization step, and no emulsifier was introduced in the second polymerization step.

## Example 5

A resin composition was prepared in the same manner as in Example 1, except that the conjugated diene-based polymer latex obtained in Example 2 was used in the first polymerization step, and 0.3 parts by weight of fatty acid potassium salt was introduced as an emulsifier in the first polymerization step, and 0.3 parts by weight of fatty acid potassium salt was introduced in the second polymerization step.

## Example 6

A resin composition was prepared in the same manner as in Example 1, except that the conjugated diene-based polymer latex obtained in Example 2 was used in the first polymerization step, and 0.4 parts by weight of fatty acid potassium salt was introduced as an emulsifier in the first polymerization step, and 0.4 parts by weight of fatty acid potassium salt was introduced in the second polymerization step.

## Example 7

A resin composition was prepared in the same manner as in Example 1, except the conjugated diene-based polymer latex obtained in Example 2 was used in the first polymerization step, and 0.8 parts by weight of fatty acid potassium salt was introduced as an emulsifier in the second polymerization step.

**Comparative Example 1**

<Preparation of conjugated diene-based polymer latex>

70 parts by weight of ion exchange water, 65 parts by weight of 1,3-butadiene as a monomer, 0.8 parts by weight of fatty acid soap and 1.0 part by weight of potassium rosinate salt as emulsifiers, 1.2 parts by weight of potassium carbonate ($K_2CO_3$) as an electrolyte, 0.3 parts by weight of tert-dodecyl mercaptan (TDDM) as a molecular weight regulator, and 0.3 parts by weight of organic potassium persulfate as a polymerization initiator were introduced in batches to a nitrogen-substituted reactor, and then a polymerization reaction was performed thereon at a reaction temperature of 74 °C. When a polymerization conversion rate was 30% to 40%, 18 parts by weight of 1,3-butadiene was introduced for 5 consecutive hours, and when the polymerization conversion rate was 60%, 0.15 parts by weight of potassium persulfate, and 0.1 parts by weight of tert-dodecyl mercaptan were introduced thereto in batches, and then the temperature was raised to 80 °C to perform a polymerization reaction. Thereafter, when the polymerization conversion rate was 75%, the remaining 12 parts by weight of 1,3-butadiene, 0.03 parts by weight of t-butyl hydroperoxide, 0.054 parts by weight of dextrose, 0.04 parts by weight of sodium pyrrolic acid, and 0.002 parts by weight of ferrous sulfate were introduced thereto, and then when the polymerization conversion rate was 90%, the reaction was terminated to obtain conjugated diene-based polymer latex having a gel content of 70%, an average particle diameter of 294 nm, and a content of 14% of particles with a particle diameter of 150 nm or less in a particle diameter distribution.
A resin composition was prepared in the same manner as in Example 1, except that the obtained conjugated diene-based polymer latex was used in the first polymerization step.

**Comparative Example 2**

<Preparation of conjugated diene-based polymer latex>

130 parts by weight of ion exchange water, 80 parts by weight of 1,3-butadiene as a monomer, 2.5 parts by weight of fatty acid soap as an emulsifier, 0.3 parts by weight of potassium carbonate ($K_2CO_3$) as an electrolyte, 0.3 parts by weight of tert-dodecyl mercaptan (TDDM) as a molecular weight regulator, 0.03 parts by weight of t-butyl hydroperoxide and 0.054 parts by weight of dextrose as polymerization initiators, 0.04 parts by weight of sodium pyrrolic acid, and 0.002 parts by weight of ferrous sulfate were introduced in batches to a nitrogen-substituted reactor, and then a polymerization reaction was performed thereon at a reaction temperature of 60 °C. Thereafter, when a polymerization conversion rate was 40%, the remaining 20 parts by weight of 1,3-butadiene was introduced for 5 consecutive hours, and when the polymerization conversion rate was 60%, 0.15 parts by weight of potassium persulfate, and 0.1 parts by weight of tert-dodecyl mercaptan were introduced thereto in batches, and then the temperature was raised to 80 °C to perform a polymerization reaction. Next, when the polymerization conversion rate was 90%, the reaction was terminated to obtain conjugated diene-based polymer latex having a gel content of 92%, an average particle diameter of 330 nm, and a content of 5% of particles with a particle diameter of 150 nm or less in a particle diameter distribution.
A resin composition was prepared in the same manner as in Example 1, except that the obtained conjugated diene-based polymer latex was used in the first polymerization step.

**Comparative Example 3**

<Preparation of conjugated diene-based polymer latex>

70 parts by weight of ion exchange water, 70 parts by weight of 1,3-butadiene as a monomer, 0.8 parts by weight of fatty acid soap and 1.0 part by weight of potassium rosinate salt as emulsifiers, 1.0 parts by weight of potassium carbonate ($K_2CO_3$) as an electrolyte, 0.3 parts by weight of tert-dodecyl mercaptan (TDDM) as a molecular weight regulator, and 0.3 parts by weight of organic potassium persulfate as a polymerization initiator were introduced in batches to a nitrogen-substituted reactor, and then a polymerization reaction was performed thereon at a reaction temperature of 74 °C. When a polymerization conversion rate was 30% to 40%, 25 parts by weight of 1,3-butadiene was introduced for 5 consecutive hours, and when the polymerization conversion rate was 60%, 0.15 parts by weight of potassium persulfate, and 0.1 parts by weight of tert-dodecyl mercaptan were introduced thereto in batches, and then the temperature was raised to 80 °C to perform a polymerization reaction. Thereafter, when the polymerization conversion rate was 75%, the remaining 5 parts by weight of 1,3-butadiene, 0.03 parts by weight of t-butyl hydroperoxide, 0.054 parts by weight of dextrose, 0.04 parts by weight of sodium pyrrolic acid, and 0.002 parts by weight of ferrous sulfate were introduced thereto, and then when the polymerization conversion rate was 95%, the reaction was terminated to obtain conjugated diene-based polymer latex having a gel content of 65%, an average particle diameter of 280 nm, and a content of 5% of particles with a particle diameter of 150 nm or less in a particle diameter distribution.

A resin composition was prepared in the same manner as in Example 1, except that the obtained conjugated diene-based polymer latex was used in the first polymerization step.

**Comparative Example 4**

<Preparation of conjugated diene-based polymer latex (A) >

100 parts by weight of butadiene, 2.5 parts by weight of an emulsifier (potassium rosinate), 0.5 parts by weight of an initiator (potassium persulfate), 0.4 parts by weight of a chain transfer agent (t-dodecyl mercaptan), 1.5 parts by weight of a buffer (potassium carbonate), and 100 parts by weight of deionized water were introduced into an autoclave, and a polymerization reaction was performed at a reaction temperature of 50 °C under a nitrogen atmosphere to obtain conjugated diene-based polymer latex (A) having a gel content of 75%, an average particle diameter of 298 nm, and a content of 6% of particles with a particle diameter of 150 nm or less in a particle diameter distribution.

<Preparation of conjugated diene-based polymer latex (B) >

75 parts by weight butadiene, 25 parts by weight of styrene, 3.0 parts by weight of an emulsifier (potassium rosinate), 0.5 parts by weight of an initiator (potassium persulfate), 0.3 parts by weight of a chain transfer agent (t-dodecyl mercaptan), 1.5 parts by weight of a buffer (sodium phosphate dibasic), and 100 parts by weight of deionized water were introduced into an autoclave, and a polymerization reaction was performed at a reaction temperature of 55 °C under a nitrogen atmosphere to obtain conjugated diene-based polymer latex (B) having a gel content of 15%, an average particle diameter of 273 nm, and a content of 10% of particles with a particle diameter of 150 nm or less in a particle diameter distribution.

<Preparation of conjugated diene-based polymer latex composition>

The obtained conjugated diene-based polymer latex (A) and the conjugated diene-based polymer latex (B) were mixed at a ratio of 85:15 to prepare a conjugated diene-based polymer latex composition.

A resin composition was prepared in the same manner as in Example 1, except that the obtained conjugated diene-based polymer latex composition was used in the first polymerization step.

**Experimental Example 1**

Physical properties of the graft copolymer latex obtained in each of Examples 1 to 7 and Comparative Examples 1 to 4 were measured as follows, and the measured values are shown in Tables 1 to 3.

[0117] * Graft rate (%): 0.4 parts by weight of an antioxidant (A/O) was introduced to the graft copolymer latex obtained in each of Examples 1 to 7 and Comparative Examples 1 to 4, and the graft copolymer latex was coagulated with 1.7 parts by weight of sulfuric acid, dehydrated, and then dried using a hot air fluidized bed dryer to obtain graft copolymer powder having a moisture content of less than 1%, and 1 g of the obtained graft copolymer powder was added to 50 ml of acetone and stirred for 24 hours, and the solution was subjected to sol-gel separation by using a centrifuge, and the separated acetone solution was dropped into methanol to obtain a non-grafted portion, which was dried at 60 °C to 120 °C and weighed, and then, the weight of the non-grafted portion and the weight of a conjugated diene polymer were subtracted from 1 g of the obtained graft copolymer powder to calculate the weight of a grafted monomer, and a graft ratio was calculated according to Equation 1 below. Here, the weight of the conjugated diene-based polymer refers to the weight of solids of the conjugated diene-based polymer theoretically introduced to 1 g of the graft copolymer powder, or the weight of the conjugated diene-based polymer measured by analyzing the graft copolymer by infrared spectroscopy.

$$\text{Graft rate} = \{\text{Weight of grafted monomer (g)/Weight of conjugated diene-based polymer (g)}\} \times 100 \qquad \text{[Equation 1]}$$

[0118] * Coagulation amount (wt%): The graft copolymer latex obtained in each of Examples 1 to 7 and Comparative Examples 1 to 4 was filtered using a 100 mesh net made of SUS304, and then introduced into a convention oven to be left to stand at 80 °C for 720 minutes. Thereafter, the weight of a coagulated product caught on the 100 mesh net was measured, and the coagulation amount of the graft copolymer latex was calculated according to Equation 2 below.

Coagulation amount = {(Weight of coagulated product caught on 100 mesh net)/Theoretical total weight of butadiene rubber polymer, styrene, acrylonitrile, and additive introduced during preparation of graft copolymer} × 100     [Equation 2]

[0119]   * Mechanical stability (min): 300 g to 400 g of the graft copolymer latex obtained in each of Examples 1 to 7 and Comparative Examples 1 to 4 was measured for the time it takes for latex stability to be destroyed so that solidification occurs under the condition of 12,000 rpm shear by using Robomix equipment of PRIMIX Co., Ltd. The higher the mechanical stability, the greater the resistance to stress that may occur during transportation of the latex subjected to polymerization.

**Experimental Example 2**

Physical properties of the resin composition obtained in each of Examples 1 to 7 and Comparative Examples 1 to 4 were measured as follows, and the measured values are shown in Tables 1 to 3.

* Izod impact strength (kg·cm/cm, 1/4"): Measured in accordance with ASTM D256.
* Flow index (g/10 min): Measured under the conditions of 220 °C and 10 kg in accordance with ASTM D1238.
* Tensile strength (kg/cm$^2$): In accordance with ASTM D638, a sample with a thickness of 3.2 mm was pulled at a cross head speed of 5 mm/min using U.T.M (manufacturer; Instron, model number 4466), and a point at which the sample was cut was measured.
* Flame retardancy (sec): The prepared resin composition was prepared into a sample with a thickness of 2.0 mm, a width of 12.7 mm, and a length of 127 mm, and then in accordance with the UL-94 vertical flame test method, the time taken for a fire to be extinguished after combustion was repeatedly measured 5 times for a total of two times using a flame with conditions specified in the test method, and calculated average values are shown.

[Table 1]

| | | Example 1 | Example 2 | Example 3 | Example 4 |
|---|---|---|---|---|---|
| Conjugated diene-based polymer latex | Gel content (%) | 76 | 73 | 71 | 73 |
| | Average particle diameter (Based on solids, nm) | 300 | 300 | 297 | 300 |
| | Small particle diameter ratio (%) | 0 | 5 | 12 | 5 |
| Amount of emulsifier used (Parts by weight) | First polymerization step | 0 | 0 | 0 | 0.6 |
| | Second polymerization step | 0.6 | 0.6 | 0.6 | 0 |
| Graft copolymer latex | Average particle diameter (Based on solids, nm) | 343 | 338 | 327 | 328 |
| | Amount of coagulation (wt%) | 0.03 | 0.04 | 0.07 | 0.12 |
| | Mechanical stability (min) | 26 | 24 | 22 | 12 |
| | Graft rate (based on solids, %) | 40.4 | 41.8 | 43.5 | 42.8 |
| | Molecular weight (Based on solids, g/mol) | 88400 | 90800 | 93400 | 92400 |
| Resin composition | Izod impact strength (kg·cm/cm, 1/4") | 22.4 | 22.0 | 21.8 | 20.7 |
| | Flow index (g/10 min) | 53.1 | 52.4 | 51.6 | 51.8 |
| | Tensile strength (kg/cm$^2$) | 423 | 424 | 424 | 423 |
| | Degree of flame retardancy (sec) | 2.4 | 2.8 | 3.2 | 4.4 |

[Table 2]

| | | Example 5 | Example 6 | Example 7 |
|---|---|---|---|---|
| Conjugated diene-based polymer latex | Gel content (%) | 73 | 73 | 73 |
| | Average particle diameter (Based on solids, nm) | 300 | 300 | 300 |
| | Small particle diameter ratio (%) | 5 | 5 | 5 |
| Amount of emulsifier used (Parts by weight) | First polymerization step | 0.3 | 0.4 | 0 |
| | Second polymerization step | 0.3 | 0.4 | 0.8 |
| Graft copolymer latex | Average particle diameter (Based on solids, nm) | 330 | 325 | 331 |
| | Amount of coagulation (wt%) | 0.10 | 0.08 | 0.04 |
| | Mechanical stability (min) | 18 | 25 | 34 |
| | Graft rate (based on solids, %) | 42.4 | 40.5 | 39.1 |
| | Molecular weight (Based on solids, g/mol) | 91500 | 87500 | 86100 |
| Resin composition | Izod impact strength (kg·cm/cm, 1/4") | 21.1 | 20.4 | 19.2 |
| | Flow index (g/10 min) | 52.1 | 53.5 | 54.3 |
| | Tensile strength (kg/cm$^2$) | 422 | 423 | 423 |
| | Degree of flame retardancy (sec) | 4.0 | 4.2 | 4.0 |

[Table 3]

| | | Comparative Example 1 | Comparative Example 2 | Comparative Example 3 | Comparative Example 4 |
|---|---|---|---|---|---|
| Conjugated diene-based polymer latex (composition) | Gel content (%) | 70 | 92 | 65 | 75/15 |
| | Average particle diameter (Based on solids, nm) | 294 | 330 | 280 | 298/273 |
| | Small particle diameter ratio (%) | 14 | 5 | 5 | 6/10 |
| Amount of emulsifier used (Parts by weight) | First polymerization step | 0 | 0 | 0 | 0 |
| | Second polymerization step | 0.6 | 0.6 | 0.6 | 0.6 |
| Graft copolymer latex | Average particle diameter (Based on solids, nm) | 300 | 348 | 321 | 285 |
| | Amount of coagulation (wt%) | 0.18 | 0.03 | 0.08 | 0.42 |
| | Mechanical stability (min) | 15 | 28 | 22 | 16 |
| | Graft rate (based on solids, %) | 45.4 | 26.5 | 42.7 | 48.1 |
| | Molecular weight (Based on solids, g/mol) | 96000 | 78400 | 87800 | 88000 |

(continued)

|  |  | Comparative Example 1 | Comparative Example 2 | Comparative Example 3 | Comparative Example 4 |
|---|---|---|---|---|---|
| Resin com-position | Izod impact strength (kg·cm/cm, 1/4") | 18.5 | 20.2 | 19.8 | 18.5 |
|  | Flow index (g/10 min) | 50.5 | 56.8 | 51.1 | 55.6 |
|  | Tensile strength (kg/cm2) | 411 | 402 | 408 | 384 |
|  | Degree of flame retardancy (sec) | 6.0 | 8.0 | 7.5 | 6.2 |

As shown in Tables 1 to 3 above, it can be confirmed that the resin compositions of Examples 1 to 7 prepared using conjugated diene-based polymer latex, which is the conjugated diene-based polymer latex according to the present invention, including conjugated diene-based polymer particles having a gel content of 70 wt% to less than 80 wt% and a ratio of 10% or less of particles with a particle diameter of 150 nm or less in the particle distribution have improved impact strength, flow index, tensile strength, and flame retardancy compared to the resin composition of Comparative Example 1 prepared using conjugated diene-based polymer latex including conjugated diene-based polymer particles having a ratio of greater than 10% of particles with a particle diameter of 150 nm or less in the particle distribution.

It can be confirmed that the resin compositions of Examples 1 to 7 have improved tensile strength and flame retardancy compared to the resin composition of Comparative Example 2 prepared using conjugated diene-based polymer latex including conjugated diene-based polymer particles having a gel content of 80 wt% or greater.

It can be confirmed that the resin compositions of Examples 1 to 7 have improved tensile strength and flame retardancy compared to the resin composition of Comparative Example 3 prepared using conjugated diene-based polymer latex including conjugated diene-based polymer particles having a gel content of less than 70 wt%.

It can be confirmed that the resin compositions of Examples 1 to 7 have improved tensile strength and flame retardancy compared to the resin composition of Comparative Example 4 prepared using conjugated diene-based polymer latex including different types of conjugated diene-based polymer particles having different gel contents and average particle diameters from each other.

It can be confirmed that the resin compositions of Examples 1 to 3 in which the emulsifier was not introduced in the first polymerization step, but the emulsifier was introduced in an appropriate amount in the second polymerization step have improved flame retardancy compared to the resin composition of Example 3 in which the emulsifier was introduced only in the first polymerization step and the resin compositions of Examples 4 and 5 in which the emulsifier was introduced in both the first polymerization step and the second polymerization step.

It can be confirmed that the resin compositions of Examples 1 to 3 in which the emulsifier was not introduced in the first polymerization step, but the emulsifier was introduced in an appropriate amount in the second polymerization step have improved impact strength and flame retardancy compared to the resin composition of Example 7 in which the emulsifier was not introduced in the first polymerization step, but the emulsifier was introduced in the second polymerization step, wherein the emulsifier was introduced in excess.

**Claims**

1. A method for preparing a graft copolymer, the method comprising:

     (S1) obtaining conjugated diene-based polymer latex including conjugated diene-based polymer particles having a gel content of 70 wt% to less than 80 wt%, and having a ratio of 10% or less of particles with a particle diameter of 150 nm or less in a particle distribution; and
     (S2) introducing an aromatic vinyl-based monomer and a vinyl cyan-based monomer in the presence of the conjugated diene-based polymer latex, and performing graft polymerization thereon to obtain graft copolymer latex.

2. The method of claim 1, wherein the average particle diameter of the conjugated diene-based polymer particles is 280 nm to 320 nm.

3. The method of claim 1, wherein the step (S2) comprises:

a first polymerization step (S2-1) in which the conjugated diene-based polymer latex, the aromatic vinyl-based monomer, the vinyl cyan-based monomer, and a polymerization initiator are introduced in batches; and a second polymerization step (S2-2) in which the aromatic vinyl-based monomer, the vinyl cyan-based monomer, and an emulsifier are continuously introduced after the first polymerization step (S2-1).

4. The method of claim 3, wherein in the first polymerization step (S2-1), no emulsifier is introduced.

5. The method of claim 3, wherein based on 100 parts by weight of the sum of the conjugated diene-based polymer latex, the aromatic vinyl-based monomer, and the vinyl cyan-based monomer introduced in the first polymerization step, and the aromatic vinyl-based monomer and the vinyl cyan-based monomer introduced in the second polymerization step, the emulsifier introduced in the second polymerization step (S2-2) is introduced in an amount of 0.4 parts by weight to 0.7 parts by weight.

6. The method of claim 1, wherein the average particle diameter of the conjugated diene-based polymer particles is smaller than the average particle diameter of the graft copolymer, wherein the average particle diameter of the graft copolymer is 300 nm or greater, and 350 nm or less.

7. The method of claim 6, wherein the average particle diameter of the conjugated diene-based polymer particles is smaller than the average particle diameter of the graft copolymer.

8. The method of claim 1, wherein the conjugated diene-based polymer particles have a gel content of 70 wt% to less than 80 wt%, and a ratio of 9% or less of particles with a particle diameter of 150 nm or less in the particle distribution.

9. A conjugated diene-based polymer latex comprising conjugated diene-based polymer particles having a gel content of 70 wt% to less than 80 wt%, and a ratio of 10% or less of particles with a particle diameter of 150 nm or less in a particle distribution.

10. A conjugated diene-based polymer latex comprising conjugated diene-based polymer particles having a gel content of 70 wt% to less than 80 wt%, and a ratio of 9% or less of particles with a particle diameter of 150 nm or less in a particle distribution.

## INTERNATIONAL SEARCH REPORT

International application No.

**PCT/KR2024/012081**

### A. CLASSIFICATION OF SUBJECT MATTER

**C08F 279/04**(2006.01)i; **C08F 2/00**(2006.01)i; **C08F 2/24**(2006.01)i; **C08J 5/02**(2006.01)i

According to International Patent Classification (IPC) or to both national classification and IPC

### B. FIELDS SEARCHED

Minimum documentation searched (classification system followed by classification symbols)

C08F 279/04(2006.01); C08C 1/065(2006.01); C08F 2/01(2006.01); C08F 255/08(2006.01); C08L 25/12(2006.01); C08L 51/04(2006.01); C08L 55/02(2006.01); C08L 9/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 겔(gel), 입자(particles), 그라프트(graft), 공중합체(copolymer), 중합(polymerization)

### C. DOCUMENTS CONSIDERED TO BE RELEVANT

| Category* | Citation of document, with indication, where appropriate, of the relevant passages | Relevant to claim No. |
|---|---|---|
| X | KR 10-2002-0035711 A (LG CHEM INVESTMENT, LTD.) 15 May 2002 (2002-05-15)<br>See abstract; claim 1; and paragraphs [0006]-[0035]. | 1-10 |
| A | KR 10-1995-0010123 B1 (HAN NAM CHEMICAL CO., LTD.) 07 September 1995 (1995-09-07)<br>See claims 1-3. | 1-10 |
| A | KR 10-2022-0006469 A (LG CHEM, LTD.) 17 January 2022 (2022-01-17)<br>See claims 1-10. | 1-10 |
| A | KR 10-2002-0039854 A (LG CHEM INVESTMENT, LTD.) 30 May 2002 (2002-05-30)<br>See claims 1-3. | 1-10 |
| A | KR 10-0405307 B1 (LG CHEM, LTD.) 12 November 2003.<br>See claim 1. | 1-10 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 November 2024** | **20 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/012081**

| Patent document cited in search report | | | Publication date (day/month/year) | Patent family member(s) | | | Publication date (day/month/year) |
|---|---|---|---|---|---|---|---|
| KR | 10-2002-0035711 | A | 15 May 2002 | KR | 10-0385729 | B1 | 27 May 2003 |
| KR | 10-1995-0010123 | B1 | 07 September 1995 | KR | 10-1993-0012951 | A | 21 July 1993 |
| KR | 10-2022-0006469 | A | 17 January 2022 | KR | 10-2692499 | B1 | 07 August 2024 |
| KR | 10-2002-0039854 | A | 30 May 2002 | KR | 10-0405307 | B1 | 12 November 2003 |
| KR | 10-0405307 | B1 | 12 November 2003 | KR | 10-2002-0039854 | A | 30 May 2002 |

Form PCT/ISA/210 (patent family annex) (July 2022)

**EP 4 763 878 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230107205

- JP 7005990 B